# EUROPÄISCHE PATENTANMELDUNG

(11) **EP 0 914 852 A2**
(43) Veröffentlichungstag der Anmeldung: **12.05.1999**
(21) Anmeldenummer: 98118860.0
(22) Anmeldetag: 06.10.1998
(51) Int. Cl.: A63H 17/34

(54) **Spielzeugmotor für Fahrräder**

(30) Priorität: 05.11.1997 DE 19749976; 18.06.1998 DE 19827118
(71) Anmelder: Philippi, Peter, 01705 Freital (DE)
(72) Erfinder: Philippi, Peter, 01705 Freital (DE)
(74) Vertreter: Hofmann, Klaus, Dipl.-Ing. Patentanwalt

(57) **Zusammenfassung**

Die Erfindung betrifft einen Spielzeugmotor, der als Motorradattrappe insbesondere für Kinderfahrräder einsetzbar ist.

Die Aufgabe der Erfindung besteht darin, einen Spielzeugmotor für Fahrräder zu entwickeln, mit dessen Hilfe Fahrzeuggeräusche nachgeahmt werden können. Er soll ein geringes Gewicht besitzen, unkompliziert an- und abbaubar sowie einfach und kostengünstg herstellbar sein.

Erfindungsgemäß führt von einer Motorattrappe (1) eine Schlauchleitung (3) zu einem Bedienteil (4). Die Motorattrappe (1) besitzt eine Ausformung (5) zur Aufnahme des Fahrradrahmens, deren Flanken sich nach außen hin um einen Öffnungswinkel α erweitern oder die biegsam sind. Von der Motorattrappe (1) geht eine Auspuffanlagenattrappe ab. In der Motorattrappe oder im Auspuff sind eine Stromquelle (9), ein Töne erzeugendes Elektronikbauteil (10) sowie ein Lautsprecher (11) enthalten und mittels in der Schlauchleitung (3) befindlichen Drähten mit dem Bedienteil (4) verbunden. Das Bedienteil (4) besitzt Bedienknöpfe (12) zur Auslösung von Fahrzeuggeräuschen.

## Beschreibung

Die Erfindung betrifft einen Spielzeugmotor, der als Motorradattrappe insbesondere für Hinderfahrräder einsetzbar ist.

EP 0 669 149 A2 beschreibt ein Kinderfahrzeug mit integrierter Audio-Wiedergabeeinrichtung. Dabei sind in einem Gehäuse der Lenkeinrichtung eine Audio-Signale aufweisende Platine, eine Stromquelle und ein Lautsprecher integriert. Die Auslösung der Audio-Signale erfolgt mittels einer im Deckel integrierten Betätigungseinrichtung Aufgrund der üblichen Lenkergestaltung ist diese Lösung für Fahrräder ungeeignet.

Für Fahrräder sind keine Motorradattrappen mit integrierter Audio-Wiedergabe bekannt.

Die Aufgabe der Erfindung besteht darin, einen Spielzeugmotor für Fahrräder zu entwickeln, mit dessen Hilfe Fahrzeuggeräusche nachgeahmt werden können. Er soll ein geringes Gewicht besitzen, unkompliziert an- und abbaubar sowie einfach und kostengünstg herstellbar sein.

Erfindungsgemäß wird die Aufgabe durch den Spielzeugmotor gemäß Patentanspruch 1 gelöst. Ausgestaltende Merkmale sind in den Unteransprüchen 2 bis 10 beschrieben.

Nachfolgend wird die Erfindung an einem Ausführungsbeispiel näher erläutert. Es zeigen:
- Fig. 1: Seitenansicht eines Spielzeugmotors
- Fig. 2: Schnitt A-A
- Fig. 3: Spielzeugmotor mit parallelen Flanken

Ein Kinderfahrrad soll mit einem geräuscheerzeugenden Spielzeugmotor ausgestattet werden. Das Fahrrad besitzt üblicherweise einen im Bereich der Pedale V-förmig verbundenen Rahmen, in den die Motorattrappe 1 einsetzbar ist.

Der Spielzeugmotor besteht aus einer Motorattrappe 1, die ein Kunststoffhohlkörper ist und die einem Motorradmotor mit Zylinder nachgestaltet ist. Er ist aus zwei Spritzgußteilen hergestellt, die anschließend verklebt werden. Die Motorattrappe 1 besitzt eine Ausformung 5 zur Aufnahme des Fahrradrahmens. Der innere Radius R der Ausformung 5 entspricht etwa dem kleinsten üblichen Fahrradrahmenradius, wobei sich die Flanken 16 der Ausformung 5 vom inneren Scheitelpunkt weg um einen Öffnungswinkel α = 15° erweitern. Dadurch kann die Motorattrappe 1 leicht auf den V-förmigen Rahmenbereich oberhalb der Pedale aufgesteckt und festgeklemmt werden. Die sich nach außen erweiternde Ausformung erlaubt eine sichere Klemmverbindung auch bei unterschiedlichen Fahrradrahmenstärken.

Die Motorattrappe 1 besitzt einen, gleich bei der Herstellung angegossenen, Anschlußstutzen 7. Auf diesen Anschlußstutzen 7 ist ein flexibler Kunststoffschlauch 6 aufgesteckt, der den Krümmer und das Auspuffrohr darstellt. Ein zweites geripptes Schlauchstückteil 13 soll eine bei Geländemotorrädern übliche Auspuffverkleidung darstellen. Auf dem flexiblen Schlauchstück 6 ist ein starres Rohrendstück 8 aufgesteckt, das den Schalldämpfer darstellen soll. Dieses Endstück kann verchromt oder mit Aluminiumfolie bezogen sein.

Auf die oben offene Motorattrappe 1 ist ein abnehmbarer, den Zylinderkopf 2 darstellender Kunststoff-Spritzguß-Hohlkörper aufgesteckt. In diesem Zylinderkopf 2 befinden sich an je einer angegossenen Halterung eine als Stromquelle 9 dienende 9-Volt Blockbatterie, die Strom für ein Töne erzeugendes Elektronikbauteil 10 liefert. Dieses Elektronikbauteil 10 kann einen programmierbaren Speicherchip aus einem elektronischen Harmonium enthalten, der beispielsweise Motor-, Schalt-, Quietsch-, Brems-, Hup- oder Sirenengeräusche erzeugen kann. Das Elektronikbauteil 10 ist über entsprechende Drähte mit einem kleinen Lautsprecher 11 verbunden, der in Richtung der oben offenen Motorattrappe 1 ausgerichtet ist, wodurch dieser als Resonanzkörper dient und dessen Wirkung erhöht. Die Motorattrappe 1 besitzt seitliche Schallöffnungen 17.

Vom Elektronikbauteil 10 führen 8 Drähte durch die etwa 80 cm lange flexible Kunststoffschlauchleitung 3 zu einem Bedienteil 4. Am Zylinderkopf ist z.B. ein zusätzlicher Kerzenstecker 14 über die Schlauchleitung 3 geschoben. Das Bedienteil 4 besitzt 4 Bedienknöpfe 12 zur Auslösung der gewünschten Fahrzeuggeräusche.

Zur Befestigung des Spielzeugmotors am Fahrrad besitzen das Schlauchstück 6, das Rohrendstück 8 und das Bedienteil 4 je eine Klemmschelle 15, die ein einfaches Aufstecken auf den Rahmen, den Gepäckträger oder den Lenker ermöglichen.

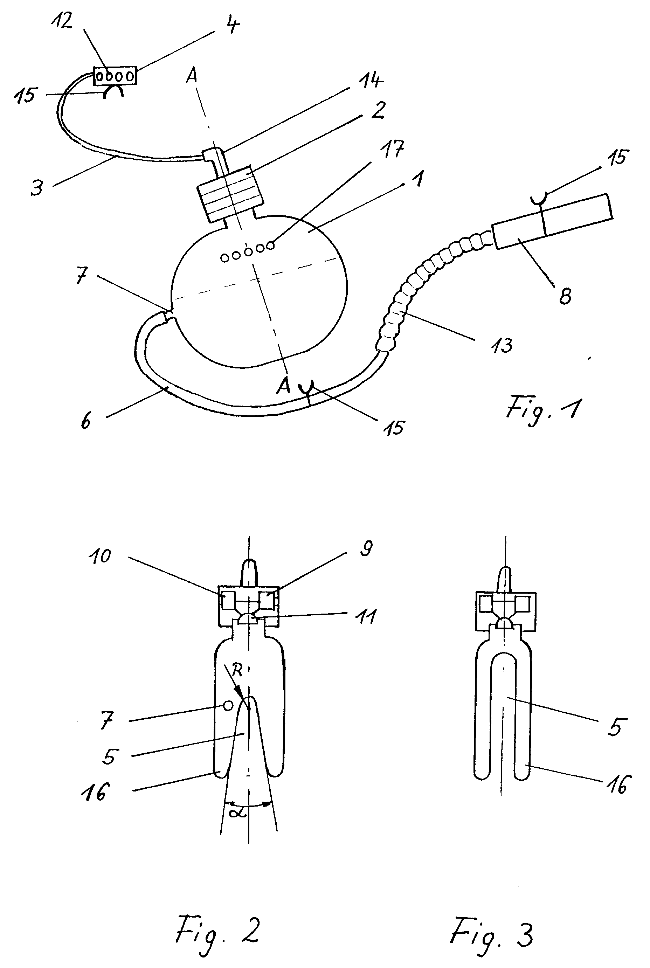

Eine weitere Ausführungsform der Motorattrappe 1 ist in Fig. 3 dargestellt. Die Flanken 16 der aus Metallblechen hergestellten Motorattrappe 1 verlaufen hier parallel zueinander. Aufgrund deren geringer Stärke sind die Flanken biegsam, womit sie sich je nach Rahmenstärke nach außen auseinanderdrücken lassen und somit eine ausreichend feste Klemmverbindung ermöglichen.

Eine nicht dargestellt Ausführungsform besteht darin, daß die Stromquelle (9), das Töne erzeugende Elektronikbauteil (10) sowie der Lautsprecher (11) oder nur bestimmte Teile davon in das Rohrendstück 8 integriert sind.

Der Spielzeugmotor ist sowohl für Herren aus auch für Damenfahrräder geeignet. Er ist aufgrund seiner Ausbildung als Kunststoffhohlkörper sehr leicht und unaufwendig herstellbar. Durch seine lösbaren Steck- und Klemmverbindungen ist er auch für Kinder sehr leicht an- und abzubauen. Aufgrund der flachen Motorattrappe 1, den sicheren Klemmbefestigungsmöglichkeiten und der Batterie-/Akkustromversorgung besteht keine Verletzungsgefahr.

### Bezugszeichenaufstellung

- 1: Motorattrappe
- 2: Zylinderkopf
- 3: Schlauchleitung
- 4: Bedienteil
- 5: Ausformung
- 6: Schlauchstück
- 7: Anschlußstutzen
- 8: Rohrendstück
- 9: Stromquelle
- 10: Töne erzeugendes Elektronikbauteil
- 11: Lautsprecher
- 12: Bedienknöpfe
- 13: geripptes Schlauchstück
- 14: Kerzenstecker
- 15: Klemmschelle
- 16: Flanken
- 17: Schallöffnungen

## Patentansprüche

1. Spielzeugmotor für Fahrräder mit folgenden Merkmalen:
- von einer Motorattrappe (1) führt eine Schlauchleitung (3) zu einem Bedienteil (4),
- die Motorattrappe (1) besitzt eine Ausformung (5) zur Aufnahme des Fahrradrahmens,
- von der Motorattrappe (1) geht eine Auspuffanlagenattrappe ab,
- in der Motorattrappe (1) oder der Auspuffanlagenattrappe sind eine Stromquelle (9), ein Töne erzeugendes Elektronikbauteil (10) sowie ein Lautsprecher (11) enthalten und mittels Drähten miteinander und mittels in der Schlauchleitung (3) befindlichen Drähten mit dem Bedienteil (4) verbunden,
- das Bedienteil (4) besitzt einen oder mehrere Bedienknöpfe (12) zur Auslösung von Fahrzeuggeräuschen.

2. Spielzeugmotor nach Anspruch 1, bei dem die Stromquelle (9), das Töne erzeugende Elektronikbauteil (10) und der Lautsprecher in einem Zylinderkopf (2) befestigt sind, wobei der Zylinderkopf (2) vom Motor (1) abnehmbar ist.

3. Spielzeugmotor nach Anspruch 2, bei dem der Lautsprecher (11) im Zylinderkopf (2) in Richtung Motorattrappe (1) ausgerichtet ist und die Motorattrappe (1) Schallöffnungen aufweist (17).

4. Spielzeugmotor nach den Ansprüchen 1 bis 3, bei dem der innere Radius R der Ausformung (5) etwa dem kleinsten üblichen Fahrradrahmenradius entspricht.

5. Spielzeugmotor nach den Ansprüchen 1 bis 4, bei dem sich die Flanken der Ausformung (5) vom inneren Scheitelpunkt weg um einen Öffnungswinkel α erweitern.

6. Spielzeugmotor nach Anspruch 5, bei dem der Öffnungswinkel α weniger als 20° beträgt.

7. Spielzeugmotor nach den Ansprüchen 1 bis 4, bei dem die Flanken der Ausformung (5) annähernd parallel verlaufen und die Flanken biegsam sind.

8. Spielzeugmotor nach den Ansprüchen 1 bis 7, bei dem die Auspuffanlagenattrappe aus einem flexiblen Schlauchstück (6), welches direkt in der Motorattrappe (1) oder an einem daran befestigten Anschlußstutzen (7) einsteckbar ist, und einem starren Rohrendstück (8) besteht.

9. Spielzeugmotor nach den Ansprüchen 1 bis 8, bei dem das Schlauchstück (6) und/oder das Rohrendstück (8) und/oder die Motorattrappe (1) und/oder die Schlauchleitung (3) und/oder das Bedienteil (4) eine oder mehrere Fahrradbefestigungsteile (15) besitzen, wie z.B. Schellen oder Schlauchbänder oder Klettbänder.

10. Spielzeugmotor nach den Ansprüchen 1 bis 9, bei dem die äußeren Bauteile aus Kunststoff bestehen.
